# EUROPÄISCHE PATENTSCHRIFT

(11) **EP 2 300 158 B1**
(45) Veröffentlichungstag und Bekanntmachung des Hinweises auf die Patenterteilung: **20.05.2015**
(21) Anmeldenummer: 09753690.8
(22) Anmeldetag: 29.05.2009
(51) Int. Cl.: B01J 37/02, B01J 37/18, B01J 21/16, B01J 35/02, B01J 35/10, B01J 37/00, B01J 23/72, B01J 35/00, C01G 3/02

(54) **NANOKRISTALLINES KUPFEROXID UND VERFAHREN ZU DESSEN HERSTELLUNG**
NANOCRYSTALLINE COPPER OXIDE, AND METHOD FOR THE PRODUCTION THEREOF
OXYDE DE CUIVRE NANOCRISTALLIN ET PROCÉDÉ POUR LE PRODUIRE

(30) Priorität: 30.05.2008 DE 102008026210
(43) Veröffentlichungstag der Anmeldung: 30.03.2011
(73) Patentinhaber: Süd-Chemie IP GmbH & Co. KG, 80333 München (DE)
(72) Erfinder: WOELK, Hans-Joerg, 83022 Rosenheim (DE); HAGEMEYER, Alfred, 83043 Bad Aibling (DE); GROSSMANN, Frank, 81667 München (DE); WEGNER, Oliver, 83052 Bruckmühl (DE)
(74) Vertreter: Stolmár & Partner Patentanwälte PartG mbB
(86) Internationale Anmeldenummer: PCT/EP2009/003883
(87) Internationale Veröffentlichungsnummer: WO 2009/144035

(56) Entgegenhaltungen:
- WO-A-01/17673
- DE-A1-102006 032 452
- C.L. CARNES, J. STIPP, K.J. KLABUNDE: "synthesis, characterization and adsorption studies of nanocrystalline coppper oxide and nickel oxide" LANGMUIR, Bd. 18, 2002, Seiten 1352-1359, XP002542513

## Beschreibung

Die vorliegende Erfindung betrifft ein Verfahren zur Herstellung von nanokristallinem Kupferoxid, das als Katalysator oder als Katalysatorbestandteil, insbesondere bei der Dampfreformierung von Methanol oder bei der Hydrierung von Estern, verwendet werden kann.

Metalloxide, insbesondere gemischte Metalloxide, finden ein weites technisches Anwendungsgebiet, wie beispielsweise in Keramiken, Polymeradditiven, Füllstoffen, Pigmenten, reaktiven Oberflächen, Katalysatoren, Katalysatorbestandteilen etc.

Insbesondere finden Metalloxide auch Verwendung als Katalysatoren, beispielsweise für die Herstellung von oxidischen Katalysatoren, insbesondere bei der Herstellung von Methanol bzw. für die Hydrierung von Estern. Wichtige Größen bei dem Einsatz von Oxiden als Katalysatoren bzw. als Katalysatorvorläufer oder deren Bestandteile sind insbesondere die Metalloberfläche der reduzierten Metalle.

Durch die gezielte Steuerung des Herstellungsprozesses (Kristallisationsprozess) von Oxiden kann durch die Zusammensetzung des/der Edukte diese beeinflusst werden. Ein wichtiger Faktor ist hierbei insbesondere die Kristallitgröße bei verschiedenen Katalysatorsystemen, die von R. Schlögl et al. (Angewandte Chemie, 116, 1628-1637, 2004) im Detail untersucht worden sind.

Ein weiterer wichtiger Parameter ist die BET Oberfläche dieser Teilchen, wobei in etwa als Faustregel gilt, dass je höher die BET Oberfläche, desto höher auch die katalytische Aktivität ist. Daher war man immer bestrebt, ein Katalysatorpulver mit einer hohen BET Oberfläche zu erhalten. Des Weiteren tragen kleine Metall-Kristallite zu einer großen und aktiven Gesamtmetalloberfläche bei und fördern damit eine hohe katalytische Aktivität.

Zu diesem Zweck wurden immer mehr auch sogenannte nanokristalline Pulver in Betracht gezogen, da diese für katalytische Anwendungen besonders geeignet erscheinen. Allerdings treten hier oftmals ungelöste Herstellungsprobleme auf. Ein Nanokristall ist ein kristalliner Stoff, dessen Größe im Bereich von Nanometern liegt, oder anders gesagt, ein Nanopartikel mit einer größtenteils kristallinen Struktur.

Nanokristalline Oxidpulver werden üblicherweise bislang entweder durch chemische Synthese (beispielsweise durch Co-Fällung etc.), durch mechanische Verfahren oder durch sogenannte thermophysikalische Verfahren hergestellt. Allerdings erreicht dabei die gewünschte BET-Oberfläche nur Werte im beispielsweisen Bereich von Kupferoxiden (z.B. durch Kalzinierung von Cu₂OH₂CO₃) von maximal 60 bis 90 m²/g.

Typischerweise wird bei der chemischen Synthese von nanokristallinen Pulvern, ausgehend von sogenannten Precursor-Verbindungen, durch chemische Reaktionen ein Pulver synthetisiert, beispielsweise mittels Hydroxidfällung, Synthese durch Hydrolyse mit metallorganischen Verbindungen und Hydrothermalverfahren. Die endgültige Struktur der Nanokristallite wird typischerweise erst nach der bzw. während der Kalzinierung der so erhaltenen Produkte erreicht.

Nachteilig sind mechanische Herstellungsverfahren, da meistens inhomogene Partikelgrößenverteilungen erreicht werden bzw. die Partikel amorph werden aufgrund des auf die Partikel ausgeübten Druckes und auch die allgemeine Partikelgröße zu groß ist, um die gewünschten kleinen Metall-Kristallite nach der Reduktion zu erhalten.

Ebenso sind thermophysikalische Methoden, wie sie beispielsweise in der WO 2004/005184 beschrieben sind, bekannt. Diese finden insbesondere Anwendung bei der großtechnischen Herstellung von feinkristallinem Siliziumdioxid, bei dem leicht flüchtige Siliziumverbindungen einer Knallgasflamme versprüht werden.

Weiter sind sogenannte Plasmasyntheseverfahren bekannt, bei denen die Ausgangsstoffe in einem bis zu 6.000 Kelvin heißen Plasma verdampft werden oder CVD-Verfahren, bei dem gasförmige Produkte zur Reaktion gebracht werden.

Für die Dampfreformierung von Methanol werden üblicherweise CuO/ZnO/Al₂O₃-basierte Katalysatoren verwendet, die oft eine mangelnde Langzeitstabilität und einen hohen Kohlenstoffgehalt im Katalysator aufweisen. Das Produkt weist oft sehr hohe unerwünschte C Gehalte neben Wasserstoff und Kohlendioxid auf. Die spezifischen Parameter dieser Systeme wurden von H. Purnama, Catalytic Study of Copper based Catalysts for Steam Reforming of Methanol (Dissertation Berlin 2003) im Detail untersucht.

Die Anwendung in der Hydrierung von Estern, beispielsweise von Maleinsäuredimethylestern zu 1,4-Butandiol, γ-Butyrolacton und Tetrahydrofuran an Cu/ZnO-Katalysatoren, die typischerweise durch Co-Fällung hergestellt wurden, wurde von Schlander, Dissertation, Karlsruhe 2000, im Detail untersucht und CuO basierte Katalysatoren mit hoher Aktivität beschrieben.

Attraktiv ist insbesondere auch das Zwischenprodukt 1,4-Butandiol mit zwei endständigen Hydroxylgruppen, aus dem beispielsweise Polybutylenterephthalat, Polyurethan und Polyester erhalten werden können. Neben der Herstellung von Polymeren wird 1,4-Butandiol ebenfalls zu Tetrahydrofuran und γ-Butyrolacton weiterverarbeitet. In all diesen Produkten gibt es einen erhöhten Bedarf und somit auch die Notwendigkeit, weitere aktivere und selektivere Katalysatoren zur Verfügung zu stellen.

Weitere Details zu kupferhaltigen Katalysatoren, insbesondere auf Cu/ZnO-Basis, finden sich in der Dissertation von C. Olinger, Untersuchung der einstufigen Gasphasenhydrierung von Dimethylmaleat zur Herstellung von γ-Butyrolacton, 1,4-Butandiol und Tetrahydrofuran (Dissertation Karlsruhe, 2005).

Die WO 2007/136488 A2 beschreibt schalenartig aufgebaute Kupferoxid-Nanopartikel-Systeme, wobei der Kern eines Nanopartikels aus entweder Cu₂O bzw. einer nicht näher spezifizierten Mischung aus metallischem Cu und Cu₂O besteht und sich auf Teilen der Oberfläche eines derartigen Nanopartikels CuO befindet. Die Dicke der Schicht aus CuO beträgt dabei ungefähr 1 nm.

Dieses schalenartige Katalysatorsystem kann geträgert oder nicht geträgert vorliegen. Die Herstellung der Cu₂O Nanopartikel erfolgte gemäß der Vorschrift der WO 2005/060610, wobei die Nanopartikel während der Synthese durch Liganden wie Oleinsäure bzw. Trioctylamin stabilisiert werden.

C.L. Carnes et al. beschreiben in Langmuir 2002, 18, 1352 - 1359 Synthese-, Charakterisierungs- und Adsorptionsstudien von nanokristallinem Kupferoxid und Nickeloxid.

WO 01/17673 A offenbart stabile hochaktive Katalysatoren auf Kupferbasis. Diese Katalysatoren zeichnen sich durch eine hohe Oberfläche, eine kleine Kupferkristallitgröße und eine hohe Metallbeladung aus.

Die DE 10 2006 032 452 A1 betrifft ein Verfahren zur Herstellung nanokristalliner Metalloxidpartikel, umfassend die Schritte a) des Einbringens einer Ausgangsverbindung in eine Reaktionskammer mittels eines Trägerfluids, b) des Unterwerfens der Ausgangsverbindung in einer Behandlungszone unter eine pulsierend einwirkende thermische Behandlung, c) des Bildens von nanokristallinen Metalloxidpartikeln, d) des Ausbringens der in Schritt b) und c) erhaltenen nanokristallinen Metalloxidpartikel aus dem Reaktor, wobei die Ausgangsverbindung in Form einer Lösung, Aufschlämmung, Suspension oder in festem Aggregatzustand in die Reaktionskammer eingebracht wird.

Aufgabe der vorliegenden Erfindung war daher, ein Verfahren zur Herstellung eines nanokristallinen Kupferoxids bereitzustellen, wobei das Kupferoxid insbesondere auch einen geringen Kohlenstoffgehalt aufweist sowie eine hohe Oberfläche, um als Katalysatorbestandteil, insbesondere bei der Hydrierung von Estern bzw. bei der Dampfreformierung von Methanol, in geträgerter oder nicht-geträgerter Form Verwendung zu finden.

Die Aufgabe wird gelöst durch ein Verfahren zur Herstellung eines nanokristallinen Kupferoxids, vorzugsweise mit einer BET-Oberfläche von >95 m²/g.

Der Begriff "Kupferoxid" bezieht sich erfindungsgemäß ausschließlich auf das zweiwertige Kupferoxid mit der Formel CuO.

Bevorzugt weist das erfindungsgemäß hergestellte Kupferoxid einen Restkohlenstoffgehalt von <10 % auf, bevorzugt von weniger als 5 %, ganz besonders bevorzugt von <2 % bezogen auf das Gesamtgewicht des CuO.

Der genaue Kohlenstoffgehalt ist durch die Prozessparameter bei der Herstellung bedingt und ist auch abhängig vom Ausgangsmaterial.

Eine derart hohe erfindungsgemäße BET-Oberfläche (nach: Brunauer, Emmett und Teller, Bestimmung nach DIN 66131 bzw. 66132) ist bislang von keinem anderen Kupferoxid bekannt. Die hohe BET-Oberfläche erhöht auch in Zusammenhang mit dem niedrigen Kohlenstoffgehalt die katalytische Aktivität und überraschenderweise auch die Selektivität des erfindungsgemäß hergestellten nanokristallinen Kupferoxids als Katalysator bzw. Katalysatorvorläufer insbesondere in den beiden vorgenannten Reaktionen.

Bevorzugt liegt die BET-Oberfläche des erfindungsgemäß hergestellten nanokristallinen Kupferoxids in einem Bereich von 95 bis 300 m²/g, und die Teilchengröße des erfindungsgemäß hergestellten Kupferoxids ist kleiner als 100 µm. Bevorzugt liegen erfindungsgemäße Teilchengrößen im Bereich von 4 nm - 20 nm für Primärkristallite und im Bereich von 20-100 nm für die Sekundärkristallite.

Das geträgerte erfindungsgemäß hergestellte CuO weist eine BET Oberfläche im Bereich von 2 - 200 m²/g auf.

In bevorzugten Weiterbildungen der Erfindung ist das erfindungsgemäß hergestellte nanokristalline Kupferoxid geträgert, wobei der Träger beispielsweise klassische Trägermaterialien, wie SiO₂, ZrO₂, Bentonit, Boehmit, Montmorillonit, Al₂O₃, TiO₂, ZnO, MgSiO₄, CaSiOy oder klassische Aluminosilikate und Mischungen davon umfassen kann. Generell lassen sich aber für die Zwecke der vorliegenden Erfindung alle keramischen Materialien verwenden, die üblicherweise mit dem Begriff "technische Keramik" bezeichnet werden und sowohl nicht-oxidische (z.B Carbide, Nitride, Silizide usw) wie auch oxidische Materialien umfassen (siehe z.B.: Brevier Technische Keramik, Fahner Verlag, Lauf a.d. Pegnitz, 4. Auflage 2003). Das CuO wird dabei mittels des weiter unten im Detail beschriebenen Verfahrens auf den Träger aufgebracht. Dabei werden für das geträgerte CuO BET Oberflächen im Bereich von 2-200 m²/g beobachtet. Bevorzugte Systeme sind z. B. CuO/ZnO/Al₂O₃, CUO/ZnO usw.

Bevorzugt liegt die Teilchengröße des geträgerten nanokristallinen Kupferoxids im Bereich von 50 bis 2000 nm. Ganz besonders bevorzugt liegt die mittlere Teilchengröße dabei bei 100-300 nm, ganz besonders bevorzugt bei 200 nm ± 10 nm. Diese Größenangaben beziehen sich dabei auf das Gesamtsystem aus Trägerpartikel/CuO.

Ein auf dem erfindungsgemäß hergestellten geträgerten Kupferoxid basierender Katalysator weist verglichen mit den in der EP 1 842 843 A1 oder WO 2004/085356 A1 beschriebenen Katalysatoren, die typischerweise unter der Bezeichnung 85/1 bei Davy-Process Technology Ltd., England erhältlich sind, eine um den Faktor 1,5 höhere Selektivität und Reaktivität bei der Hydrierung von Carbonsäurealkylestern auf.

Ein Formkörper kann das erfindungsgemäß hegestellte nanokristalline Kupferoxid bzw. geträgertes nanokristallines Kupferoxid enthalten. Dieser Formkörper ist ein auf dem Gebiet der Heterogenkatalyse an sich bekannter Formkörper, wie er beispielsweise in Form von beliebigen dreidimensionalen Körpern, wie Tabletten, Ringen etc. vorliegen kann. Das CuO kann beispielsweise durch Coaten, Sprayen oder mittels Co-Extrusion etc. in bzw. auf den Formkörper aufgebracht werden. Das Grundmaterial des Formkörpers kann dabei typischerweise mit dem vorstehenden beschriebenen Trägermaterial identisch sein.

Die Aufgabe der vorliegenden Erfindung wird somit gelöst durch die Bereitstellung eines Verfahrens zur Herstellung eines nanokristallinen geträgerten oder nicht-geträgerten Kupferoxids, welches eine möglichst monomodale Teilchengrößenverteilung aufweist, weiter eine hohe BET-Oberfläche und die vorgenannten Nachteile des Standes der Technik vermeidet. Insbesondere sollten Phasenumwandlungen des Produktes während der Synthese vermieden werden und die Partikelgröße einstellbar sein. Diese Aufgabe wird erfindungsgemäß gelöst durch ein Verfahren, umfassend die Schritte
a) des Einbringens einer Kupferausgangsverbindung in eine Reaktionskammer mittels eines Trägerfluids, und wobei die Kupferausgangsverbindung in Form einer Lösung, Aufschlämmung, Suspension oder in festem Aggregatzustand in die Reaktionskammer eingebracht wird,
b) einer thermischen Behandlung der Kupferausgangsverbindung in einer Behandlungszone der Reaktionskammer mittels einer pulsierenden Strömung bei einer Temperatur von 200 bis 500°C,
c) des Bildens von nanokristallinem Nickeloxidmaterial,
d) des Ausbringens des in Schritt b) und c) erhaltenen nanokristallinen Kupferoxidmaterials aus dem Reaktor,
wobei als Kupferausgangsverbindung eine Verbindung, ausgewählt aus der Gruppe, bestehend aus einem Kupfersalze einer organischen Säure, einem Hydroxid, einem Hydroxocarbonat, einem Carbonat, einem Nitrats bzw. Mischungen davon, verwendet wird.

Überraschenderweise wurde gefunden, dass durch das erfindungsgemäße Verfahren der Kristallisationsprozess gezielt gesteuert werden kann, insbesondere die Größe der Kristallite. Diese lag bei 4-20 nm, bevorzugt bei 8-20 nm. Die BET Oberfläche der entsprechenden erhaltenen Kupferoxide lag überraschenderweise im Bereich von >95 m²/g bis zu 300 m²/g.

Diese vorstehend erwähnten Parameter werden insbesondere durch die Verweilzeit der Lösung/Suspension bzw. der Teilchen in der Flamme sowie durch die Reaktortemperatur beeinflusst. Weiter überraschend wurde gefunden, dass das Verfahren bei relativ niedrigen Temperaturen von 200 bis 500°C, besonders bevorzugt von 250 bis 350°C, durchgeführt werden kann. Dies steht im überraschenden Gegensatz zu den Angaben im Stand der Technik, wobei in vergleichbaren Verfahren Temperaturen von mehr als 700°C, und zwar bis zu 1400°C, verwendet werden müssen, um kristalline Produkte zu erhalten. Zwar kann z.B. auch eine klassische "statische" Kalzinierung von Cu-Carbonat bei 275 °C durchgeführt werden, jedoch wird dabei eine BET-Oberfläche von weit unter 95 m²/g erzielt.

Durch die pulsierende thermische Behandlung werden die entstehenden nanokristallinen Kupferoxidpartikel daran gehindert zu agglomerieren, wobei anschließend typischerweise nanokristalline Produktpartikel durch den Strom an heißem Gas sofort in eine kältere Zone der Reaktorkammer überführt werden, so dass oftmals auch Kupferoxidkristallite mit Durchmessern von weniger als 20 nm erhalten werden können.

Dies führt bei den erfindungsgemäß hergestellten Kupferoxiden zu extrem hohen BET-Oberflächen von mehr als 90 m²/g, ganz besonders bevorzugt von bis zu 300 m²/g. Vorteilhafterweise können im erfindungsgemäßen Verfahren die Suspensionen ohne weitere Filtrations- und/oder Trocknungsschritte bzw. ohne Zugabe von Lösungsmitteln innerhalb eines sehr kurzen Zeitraumes, typischerweise innerhalb von wenigen Millisekunden eingesetzt werden.

Ein separater Kalzinierungsschritt ist ebenfalls nicht nötig, weil dies im erfindungsgemäßen Ein-Schritt-Verfahren in der Reaktionskammer erfolgt.

Durch die annähernd gleiche Verweilzeit jedes einzelnen Partikels in dem durch das Verfahren erzeugten homogenen Temperaturfeld entsteht ein äußerst homogenes Endprodukt mit einer sehr engen monomodalen Teilchenverteilung.

Eine Vorrichtung zur Durchführung des erfindungsgemäßen Verfahrens bei der Herstellung ist beispielsweise aus der DE 101 09 82 A1 bekannt. Im Gegensatz zu der dort beschriebenen Vorrichtung und im dort offenbarten Verfahren benötigt das vorliegende Verfahren jedoch keinen vorgelagerten Verdampfungsschritt, in der Ausgangsstoffe auf eine Verdampfungstemperatur erwärmt werden müssen.

Weiter ist von Vorteil, dass im erfindungsgemäßen Verfahren die Kupferausgangsverbindung als Lösung, Aufschlämmung, Suspension oder sogar auch fest eingesetzt werden kann.
Besonders bevorzugt sind zwar Suspensionen von entsprechenden Ausgangsverbindungen, da diese noch einmal nachträglich vermahlen werden können, so dass schon Partikel mit einer sehr kleinen Teilchengröße von <10 µm in den Reaktor eingebracht werden können, jedoch ist dies nicht unbedingt notwendig. Es wurde beobachtet, dass der Einsatz einer vorab vermahlenen (d.h. vor Einbringung in den Reaktor) Suspension die BET Oberfläche der Endprodukte um ca. 10-20 % verbessert, verglichen mit nicht vorvermahlten Suspensionen als Ausgangsprodukt. Typischerweise wird also das Pulver vor Herstellung der Suspension vermahlen, jedoch kann auch die so hergestellte Suspension erneut einem Mahlvorgang unterworfen werden.

Mittels des erfindungsgemäßen Verfahrens können die Ausgangsmaterialien typischerweise direkt über ein Trägerfluid, insbesondere ein Trägergas, ganz besonders bevorzugt in inertes Trägergas, wie beispielsweise Stickstoff etc., in die Reaktionskammer, genauer gesagt in die Brennkammer, eingeführt werden. An die Reaktionskammer ist abgasseitig ein Resonanzrohr mit einem gegenüber der Reaktionskammer deutlich verringerten Strömungsquerschnitt angeschlossen. Der Brennkammerboden ist mit mehreren Ventilen zum Eintritt der Verbrennungsluft in die Verbrennkammer ausgestattet. Die aerodynamischen Ventile sind dabei strömungstechnisch und akustisch so mit der Brennkammer und der Resonanzrohrgeometrie abgestimmt, dass die in der Brennkammer erzeugten Druckwellen des homogenen "flammenlosen" Temperaturfeldes sich vorwiegend im Resonanzrohr pulsierend ausbreiten. Es bildet sich ein sogenannter Helmholtz-Resonator mit pulsierender Strömung aus.

Typischerweise erfolgt die Zuführung des Ausgangsmaterials in die Reaktionskammer entweder mit einem Injektor oder mit einer geeigneten Zweistoffdüse oder in einem Schenkdosierer.

Vorteilhafterweise lässt sich im Falle der Verwendung von Lösungen von entsprechenden Salzen ein weiterer Fällungsschritt vermeiden, so dass diese direkt im Reaktor kalziniert werden. Bevorzugt ist das Trägerfluid ein Trägergas, wie beispielsweise Luft, Stickstoff bzw. Luft-Stickstoff-Gemische. Natürlich kann alternativ auch eine Flüssigkeit als Fluid verwendet werden, bzw. auch schon in Lösung vorliegende Ausgangsstoffe. Die Art des Trägerfluids hat insbesondere Einfluss auf die Verweilzeit in der Behandlungszone. So können beispielsweise auch direkt Suspensionen und Aufschlämmungen der Kupfersalze einer organischen Säure, eines Hydroxids, eines Hydroxocarbonats, eines Carbonats, Nitrats bzw. Mischungen davon verwendet werden.

Im Rahmen der vorliegenden Erfindung wird auch Kohlensäure (Carbonat) als organische Säure verstanden. Bevorzugt umfasst das Salz einer organischen Säure weniger als 9 Kohlenstoffatome. Ganz besonders bevorzugt sind hierbei Glyoxalsäure, Oxalsäure, Zitronensäure bzw. deren Derivate und Kohlensäure (Carbonat), wodurch der Kohlenstoffgehalt im Endprodukt besonders niedrig gehalten wird. Weiter bevorzugt sind sog. Hydroxocarbonate aufgrund ihrer leichten Zugänglichkeit und Verfügbarkeit und Kosten.

Neben der Kupferausgangsverbindung können vorteilhafterweise noch weitere Verbindungen in dem Verfahren eingesetzt werden, beispielsweise Silikate, Zinkoxid, Titanoxid, Magnesiumsilikat, Calciumsilikat, Aluminiumoxid, Boehmit, Zirkoniumoxid, Alumosilikate etc. Wie schon vorstehend ausgeführt lassen sich aber alle keramischen Materialien dafür verwenden, die üblicherweise mit dem Begriff "technische Keramik" bezeichnet werden und sowohl nicht-oxidische (z.B Carbide, Nitride, Silizide usw) wie auch oxidische Materialien umfassen (siehe z.B.: Brevier Technische Keramik, Fahner Verlag, Lauf a.d. Pegnitz, 4. Auflage.2003).

Dies führt dazu, dass in einem einzigen Schritt mittels des erfindungsgemäßen Verfahrens geträgerte Kupferoxid-Katalysatoren erhalten werden können, da diese schon auf den späteren Trägermaterialien im Reaktor abgeschieden werden. Diese werden typischer als Suspension zugegeben, entweder durch eine separate Düse oder vermischt mit der Lösung/Suspension der Kupferausgangsverbindung. Das Trägermaterial kann aber auch in gelöster oder peptisierter Form vorliegen.

Mit dem erfindungsgemäßen Verfahren können somit auch katalytisch interessante binäre bzw. polynäre Systeme, wie z. B. CuO/ZnO/Al₂O₃, CuO/ZnO etc. beispielsweise für die Dampfreformation von Methanol besonders einfach erhalten werden, sowie weitere komplexe Katalysatorsysteme, die auf der Synergie verschiedener Metalloxide beruhen. Dabei werden weitere lösliche oder nicht lösliche Verbindungen zugegeben, wobei die weiteren Verbindungen bevorzugt ausgewählt sind aus der Gruppe, bestehend aus Verbindungen des Siliziums, Zinns, Magnesiums, Titans, Aluminiums, Zirkons, Zinks sowie Mischungen davon. Für diese Verbindungen gilt das weiter oben ausgeführte für die Kupferausgangsverbindungen analog, natürlich können auch deren oxidische Suspensionen oder sogar die Verbindungen in Form von Feststoffen in dem erfindungsgemäßen Verfahren eingesetzt werden.

Durch die Kontrolle der Pulsation (regelmäßig oder unregelmäßig bzw. die Dauer und Amplituden der pulsierenden thermischen Behandlung) sowie der Verweilzeit der Ausgangsverbindung(en) in der Behandlungszone (typischerweise von 200 ms bis 2 s) kann auch die Partikelgröße eingestellt werden. Typische bevorzugte Werte liegen bei 2-300 ms und 1-40 Hertz.

Anschließend werden nach der thermischen Behandlung die entstandenen nanokristallinen Kupferoxide bzw. gemischten Oxide, wenn möglich, mittels des Trägerfluids sofort in eine kältere Zone der Reaktionskammer überführt, so dass sie in der kälteren Zone ausgetragen werden können. Die Ausbeute des erfindungsgemäßen Verfahrens beträgt dabei nahezu 100 %, da das entstehende Produkt vollständig aus dem Reaktor ausgeführt werden kann.

Wie vorstehend schon ausgeführt, wurde überraschenderweise gefunden, dass auch schon in fester Form vorliegende Oxide als Ausgangsstoffe verwendet werden können, die erfindungsgemäß durch die anschließende pulsierende Temperaturbehandlung in nanokristalline Teilchen umgewandelt werden. Dies eröffnet einen besonders weiten Anwendungsbereich des erfindungsgemäßen Verfahrens, da es nicht nötig ist, spezifische Ausgangsverbindungen, beispielsweise in Bezug auf ihre Löslichkeit, Verdampfung etc. zu selektionieren. Durch die niedrige Temperatur, die im erfindungsgemäßen Verfahren eingesetzt wird, sinkt auch die Gefahr von Zersetzungs- und Nebenreaktionen, beispielsweise insbesondere beim Einsatz von Carbonsäurederivaten, die zu Verunreinigungen des Produktes führen könnten. Weiterhin ist auch die Energiebilanz bei der Durchführung des erfindungsgemäßen Verfahrens sehr günstig, da der Energieverbrauch, verglichen mit herkömmlichen Verfahren geringer ist.

Typischerweise wird das Verfahren bei einem Druck zwischen 15 bis 40 bar durchgeführt.

Verwendung findet das erfindungsgemäß erhaltene Kupferoxid in geträgerter oder nicht-geträgerter Form beispielsweise als Katalysator bei der Dampfreformierung von Methanol oder bei der Hydrierung von Estern. Weitere Anwendungen sind beispielsweise in der WO 2004/085356 A1 beschrieben, auf deren Offenbarungsgehalt hier vollumfänglich Bezug genommen wird. Auch lässt es sich als Totaloxidationskatalysator oder als Katalysator zur Oxidation von Glyoxal.

Typischerweise wird das CuO oft vor Einsatz in einer katalytischen Reaktion z.B. mittels H₂ zu metallischem Kupfer reduziert. Vorliegend wurde beobachtet, dass wiederum mehr als 60 % des reduzierbaren Kupferoxids zu Kupfer reduziert wurden, noch bevorzugt mehr als 80 %. Dies gilt sowohl für geträgertes wie auch nicht-geträgertes CuO.

Weitere Anwendungsgebiete sind z. B. die Verwendung des erfindungsgemäß erhaltenen CuO als Verbrennungskatalysator bei der im Kohlendioxid-Sauerstoffstrom durchgeführten Mikro-Stickstoffbestimmung. Gegenüber dem handelsüblichen Produkt mit niedrigerer Oberfläche weist das erfindungsgemäß erhaltene Kupferoxid mit hoher Oberfläche verschiedene Vorteile auf: Es werden damit eine längere Lebensdauer der Rohrfüllung und eine wesentliche Verkürzung des für die einzelnen Analysen notwendigen Zeitaufwandes erreicht.

Ebenso kann das erfindungsgemäß erhaltene CuO auch als Zumischung/Bestandteil von Hochtemperatur-Supraleitern verwendet werden oder als Legierungsbestandteil bei der Herstellung von Spezialstählen. Weiter findet das erfindungsgemäß erhaltene CuO Verwendung als Zusatz beim Einfärben von Gläsern und Email. Ein weiteres Anwendungsgebiet ist die Verwendung des erfindungsgemäß erhaltenen CuO als Katalysator bei der Entschwefelung von Erdöl. Ebenso lässt sich CuO in Sonnenkollektoren als Wärmesammler verwenden, als Fungizid / Herbizid, und als Flussmittel in keramischen Glasuren.

In nicht reduzierter Form kann es ebenso als Adsorptionsmittel, z.B. bei der Entfernung von Arsen aus Gasströmen gemäß der Lehre der US 7,982,16 verwendet werden.

Noch eine weitere Anwendung des erfindungsgemäß erhaltenen CuO ist z.B. die Substitution von Hopcalit CuMn(Ag)(Co)Oₓ für die Raumtemperatur CO Oxidation, alleine oder in Kombination mit MnO₂ bzw. unter Zusatz geeigneter Promotoren.

Das erfindungsgemäße Verfahren ist nachstehend anhand der Ausführungsbeispiele sowie einer Figur näher erläutert, die jedoch nicht als Einschränkung verstanden werden sollen.

Die verwendete Vorrichtung entsprach weitgehend der in der DE 101 09 81 beschriebenen mit dem Unterschied, dass, wie schon vorstehend erläutert, die zur Durchführung des erfindungsgemäßen Verfahrens eingesetzte Vorrichtung keine Verdampfervorstufe aufwies.

### Beispiel 1

Es wurden Lösungen bzw. Suspensionen aus Cu(NO₃)₂, Cu₂(OH)₂CO₃ allein bzw. zusammen mit Al-haltigen Trägermaterialien, hier Bentonit (erhältlich von der Firma Südchemie AG) durchgeführt.

### 1. Herstellung Suspension:

In ein Blechfass wurden 20 l Wasser vorgelegt. Unter Rühren wurden langsam 11,51 kg Cu-Hydroxocarbonat (ca. 55 % Cu) zugegeben. Anschließend wurden noch 3333 g Rohton (BE30) zugegeben. Mittels Ultra-Turrax wurde die Suspension dispergiert (15 min.). Danach wurden der Suspension 45 l Wasser zugegeben. Die Suspension wurde stark gerührt, um eine Sedimentation zu vermeiden. Bei Kupfernitrat als Ausgangsmaterial wurde die Synthese analog durchgeführt.

### 2. Eindüsung Wirbelschicht:

Die Verweilzeit des Pulvers in der Wirbelschicht lag bei ca. 1-2 Sekunden. Es wurde eine 2 mm Düse verwendet.

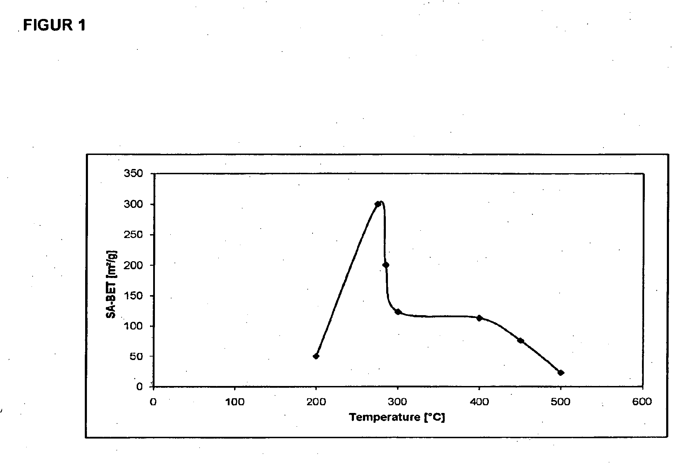

Für nicht geträgertes erfindungsgemäß erhaltenes CuO wurde ohne Zugabe von Rohton (Betonit) gearbeitet. Die Ergebnisse von BET Messungen für CuO ausgehend von einer Kupfernitratlösung sind in Figur 1 dargestellt. Dort ist die BET Oberfläche in Relation zur Prozesstemperatur gezeigt. Das Maximum der BET-Oberfläche wird demnach zwischen ca. 220 bis 300° C erreicht. Ähnliche Kurven wurden auch für CuO aus Lösungen und Suspensionen anderer Vorläuferverbindungen, insbesondere (Cu(OH)₂·CuCO₃) erhalten, so dass die Werte aus Figur 1 verallgemeinert werden können.

Wie aus Figur 1 weiter ersichtlich ist, weist die BET-Oberfläche des erfindungsgemäß erhaltenen Kupferoxids bei einer Synthesetemperatur von ca. 290°C eine BET-Oberfläche von nahezu 300 m²/g auf. Bis zu einer Temperatur von ca. 400°C ist die BET-Oberfläche noch über dem erfindungsgemäß gewünschten Wert von ca. 100 m²/g, um anschließend mit höherer Temperatur abzusinken.

### 3. Variation des Gesamtkohlenstoffgehalts

Als Ausgangsmaterial diente vorliegend ein basisches Kupferkarbonatpulver (Cu(OH)₂ßCuCO₃) mit einem Kupfergehalt von 54 % bis 56 %, die in Form einer wässrigen 15-prozentigen Suspension eingesetzt wurde.

Die basische Kupferkarbonatsuspension wurde aufeinanderfolgend bei verschiedenen Prozesstemperaturen mit einer Aufgabemenge von 14 kg/h in die pulsierende Wirbelschicht mittels einer Zweistoffsprühdüse eingesprüht.

Dabei wurde bei verschiedenen Reaktions- bzw. Prozesstemperaturen im Bereich von 250 °C bis 500 °C CuO erhalten.

Anschließend wurde das CuO im Hinblick auf seinen Gesamtkohlenstoffgehalt mittels icP-MS untersucht.

**Tabelle 1: Verhältnis von Reaktionstemperatur zum Gesamtkohlen stoffgehalt des CuO**

| **Probennummer** | **Prozesstemperatur** in °C | **Gesamtkohlenstoffgehalt** in % |
|---|---|---|
| 1 | 250 | 3, 1 |
| 2 | 300 | 2,4 |
| 3 | 350 | 0, 3 |
| 4 | 400 | 0,2 |
| 5 | 450 | 0,2 |
| 6 | 500 | 0,2 |

Die röntgehographische Analyse der CuO-Proben 1 bis 6 zeigte ausschließlich kristalline CuO-Reflexe.

Wie aus Tabelle 1 ersichtlich ist, der Gesamtkohlenstoffgehalt des CuO typischerweise kleiner 3,1 %. Bei Prozesstemperaturen zwischen 400 °C bis 500 °C beträgt er sogar nur 0,2 %. Das optimale Verhältnis zwischen Gesamtkohlenstoff und BET Oberfläche (Figur 1) wird also bei einer Prozesstemperatur von ca. 350 °C erreicht.

## Patentansprüche

1. Verfahren zur Herstellung von nanokristallinem Kupferoxid, umfassend die Schritte
a) des Einbringens einer Kupferausgangsverbindung in eine Reaktionskammer mittels eines Trägerfluids, und wobei die Kupferausgangsverbindung in Form einer Lösung, Aufschlämmung, Suspension oder in festem Aggregatzustand in die Reaktionskammer eingebracht wird,
b) einer thermischen Behandlung der Kupferausgangsverbindung in einer Behandlungszone der Reaktionskammer mittels einer pulsierenden Strömung bei einer Temperatur von 200 bis 500°C,
c) des Bildens von nanokristallinem Kupferoxidmaterial,
d) des Ausbringens des in Schritt b) und c) erhaltenen nanokristallinen Kupferoxidmaterials aus dem Reaktor,
wobei als Kupferausgangsverbindung eine Verbindung, ausgewählt aus der Gruppe, bestehend aus einem Kupfersalz einer organischen Säure, einem Hydroxid, einem Nitrat, einem Carbonat, einem Hydroxocarbonat oder Mischungen davon, verwendet wird.

2. Verfahren nach Anspruch 1, wobei die Kupferausgangsverbindung als Suspension mit einer durchschnittlichen Teilchengröße von <10 µm eingesetzt wird.

3. Verfahren nach Anspruch 1, wobei die Kupferausgangsverbindung als Lösung eingesetzt wird.

4. Verfahren nach einem der Ansprüche 1 bis 3, wobei als organische Säure eine organische Säure mit weniger als 9 Kohlenstoffatomen verwendet wird, ausgewählt wird aus der Gruppe, bestehend aus Glyoxalsäure, Oxalsäure, Zitronensäure, deren Derivaten sowie Kohlensäure (Carbonat).

5. Verfahren nach einem der Ansprüche 1 bis 4, wobei neben der Kupferausgangsverbindung noch weitere Verbindungen eingesetzt werden, die ausgewählt sind aus der Gruppe, bestehend aus Verbindungen des Siliziums, Zinns, Magnesiums, Titans, Aluminiums, Zirkons, Zinks sowie Mischungen davon.

## Claims

1. Method for the production of nanocrystalline copper oxide comprising the steps of
a) the introduction of a copper starting compound into a reaction chamber by means of a carrier fluid, and wherein the copper starting compound is introduced into the reaction chamber in the form of a solution, slurry, suspension or in solid aggregate state,
b) a thermal treatment of the copper starting compound in a treatment zone of the reaction chamber by means of a pulsating flow at a temperature of from 200 to 500°C,
c) the formation of nanocrystalline copper oxide material,
d) the discharge of the nanocrystalline copper oxide material obtained in steps b) and c) from the reactor,
wherein, as copper starting compound, a compound selected from the group consisting of a copper salt of an organic acid, a hydroxide, a nitrate, a carbonate, a hydroxocarbonate or mixtures thereof is used.

2. Method according to claim 1, wherein the copper starting compound is used as suspension with an average particle size of <10 µm.

3. Method according to claim 1, wherein the copper starting compound is used as solution.

4. Method according to one of claims 1 to 3, wherein, as organic acid, an organic acid with fewer than 9 carbon atoms is used and is selected from the group consisting of glyoxalic acid, oxalic acid, citric acid, derivatives thereof as well as carbonic acid (carbonate).

5. Method according to one of claims 1 to 4, wherein, in addition to the copper starting compound, further compounds are also used which are selected from the group consisting of compounds of silicon, tin, magnesium, titanium, aluminium, zirconium, zinc as well as mixtures thereof.

## Revendications

1. Procédé de fabrication d'oxyde de cuivre nanocristallin, comprenant les étapes
a) de l'introduction d'un composé de départ de cuivre dans une chambre réactionnelle au moyen d'un fluide porteur, et dans lequel le composé de départ de cuivre est introduit sous forme d'une solution, barbotine, suspension ou dans un état d'agrégat solide dans la chambre réactionnelle,
b) d'un traitement thermique du composé de départ de cuivre dans une zone de traitement de la chambre réactionnelle au moyen d'un courant pulsé à une température de 200 à 500°C,
c) de la formation de matériau d'oxyde de cuivre nanocristallin,
d) de l'évacuation du matériau d'oxyde de cuivre nanocristallin obtenu à l'étape b) et c) du réacteur, dans lequel un composé sélectionné parmi le groupe constitué d'un sel de cuivre d'un acide organique, d'un hydroxyde, d'un nitrate, d'un carbonate, d'un hydroxycarbonate ou de mélanges de ceux-ci est utilisé comme composé de départ de cuivre.

2. Procédé selon la revendication 1, dans lequel le composé de départ de cuivre est utilisé comme suspension avec une taille particulaire moyenne de <10 µm.

3. Procédé selon la revendication 1, dans lequel le composé de départ de cuivre est utilisé comme solution.

4. Procédé selon une des revendications 1 à 3, dans lequel un acide organique avec moins de 9 atomes de carbone est utilisé comme acide organique, est sélectionné parmi le groupe constitué de l'acide glyoxalique, l'acide oxalique, l'acide citrique, leurs dérivés ainsi que l'acide carbonique (carbonate).

5. Procédé selon une des revendications 1 à 4, dans lequel encore d'autres composés qui sont sélectionnés parmi le groupe constitué de composés du silicium, étain, magnésium, titane, aluminium, zirconium, zinc ainsi que des mélanges de ceux-ci sont utilisés outre le composé de départ de cuivre.
